# EUROPEAN PATENT SPECIFICATION

(11) **EP 3 893 432 B1**
(45) Date of publication and mention of the grant of the patent: **11.12.2024**
(21) Application number: 20382276.2
(22) Date of filing: 06.04.2020
(51) Int. Cl.: H04L 9/00, H04L 9/32

(54) **VALIDATING A DATA BLOCK FOR A VEHICLE TRAJECTORY BLOCKCHAIN AND BLOCKCHAIN GENERATION SYSTEM**
VALIDIERUNG EINES DATENBLOCKS FÜR EINE FAHRZEUGTRAJEKTORIEN-BLOCKCHAIN UND BLOCKCHAIN-ERZEUGUNGSSYSTEM
VALIDATION D'UN BLOC DE DONNÉES POUR UNE CHAÎNE DE BLOCS DE TRAJECTOIRE DE VÉHICULE ET SYSTÈME DE GÉNÉRATION DE CHAÎNE DE BLOCS

(43) Date of publication of application: 13.10.2021
(73) Proprietor: The Boeing Company, Arlington, VA 22202 (US)
(72) Inventor: SCARLATTI, David, 28042 MADRID (ES); ESTEBAN, David, 28042 MADRID (ES); CASADO, Enrique, 28042 MADRID (ES); VILAPLANA, Miguel, 28042 MADRID (ES)
(74) Representative: ZBM Patents - Zea, Barlocci & Markvardsen

(56) References cited:
- WO-A1-2020/040558
- CN-A- 110 798 807
- CN-A- 110 910 648
- US-A1- 2018 342 036
- US-A1- 2019 226 850
- BLASCH ERIK ET AL: "Blockchain Methods for Trusted Avionics Systems", 2019 IEEE NATIONAL AEROSPACE AND ELECTRONICS CONFERENCE (NAECON), IEEE, 15 July 2019 (2019-07-15), pages 192 - 199, XP033747387, DOI: 10.1109/NAECON46414.2019.9058263
- RONALD J REISMAN: "Air Traffic Management Blockchain Infrastructure for Security, Authentication, and Privacy", 7 January 2019 (2019-01-07), XP055719656, Retrieved from the Internet <URL:https://ntrs.nasa.gov/archive/nasa/casi.ntrs.nasa.gov/20190000022.pdf> [retrieved on 20200803]

## Description

### FIELD

The present disclosure relates to methods to validate actual vehicle trajectory information in a non-centralized fashion using the blockchain technology. More particularly to a method and system for a cooperative vehicle trajectory validation and recording using a vehicle trajectory blockchain.

### BACKGROUND

There exist a variety of sources gathering aircraft trajectory information. In some scenarios, a retrieval of such information from a trusted source is not possible. In other words, it is not possible to retrieve information from a single independent and recognized source with no other interests rather than providing accurate trajectory data to be used by third-party applications. Document Blasch Erik et al, 2019 IEEE National Aerospace And Electronics Conference (NAECON), IEEE, 15 July 2019, is entitled "Blockchain Methods for Trusted Avionics Systems". Document Ronald J Reisman, 7 January 2019, is entitled "Air Traffic Management Blockchain Infrastructure for Security, Authentication, and Privacy". Document CN110798807 is entitled "Method and a device for recording vehicle trajectory, a computer equipment and a medium". Document US20190226850 is entitled "System and method for tracking vehicle mileage using blockchain".

Nowadays, it is not possible to know the time evolution, i.e. historical or real-time evolution, of an aircraft location in a centralized manner from a trusted source. Air Navigation Service Providers, ANSP, manage multiple sources of surveillance information such as Primary and Secondary RADAR Tracks or ADS-B tracks, and combine such surveillance information according to their own systems. This results in a situation where sophisticated technology developments provide different trajectory representations than other less sophisticated infrastructures. The aircrafts manage on-board trajectory information that enable a safe trajectory execution. The on-board trajectory information, although it might be the most accurate, is usually only available to Airline Operating Centers, AOC. There are also profitable entities, or commercial aircraft tracking providers, that provide trajectory information through the internet by making use of ADS-B receptors, wherein ADS-B messages are openly broadcasted. The commercial aircraft tracking providers combine information from a network of receptors, filtering data and filling gaps according to their own requirements.

ANSP, e.g., Federal Aviation Administration, FAA, Eurocontrol or US NAS, airlines and commercial aircraft tracking providers, e.g., FlightAware, FR24 or Aireon, maintain their trajectory information database, which might contain tracking data, i.e., latitude, longitude, altitude and time, kinematic information, i.e. airspeeds and ground speed or kinetic data in the case of airlines i.e., fuel consumption and instantaneous aircraft mass. In some cases, information may be partially available or there may be gaps in the recorded datasets and different representations of the same trajectory can, therefore, be obtained depending on the considered source of data.

Nowadays, there is no trusted system from which a unique and accurate representation may be obtained. Thus, it is not possible to have a unique, synchronized, accurate and trusted representation of a trajectory due to the disparity of trajectory sources, limited accessibility of data and diversity of business interests of the trajectory information providers. This situation may lead to inconsistent representation of the same aircraft trajectory, making almost impossible to know which one reflects reality more accurately.

### SUMMARY

A purpose of the present disclosure is to provide methods to formally collect and validate vehicle trajectory information, avoiding the lack of trust of some of the current systems. The proposed method may be of use in an Air Traffic Management, ATM, environment, in which information, especially air vehicle trajectory information is a key enabler of advanced traffic management procedures.

The present disclosure provides a computer implemented method for validating a data block for insertion or recording into a vehicle trajectory blockchain comprising the steps of:
- providing one or more sets of aggregated trajectory data, a set of aggregated trajectory data comprising at least aggregated trajectory data defining one or more trajectories of one or more vehicles wherein the vehicles may be air vehicles;
- generating a data block from the one or more sets of aggregated trajectory data;
- mining the data block to verify whether the data block comprises valid vehicle data;
- if the data block comprises valid vehicle data, validating the data block for insertion or recording into a vehicle trajectory blockchain.

In the present disclosure vehicle may be understood as a means for transportation of goods or people such as wagons, bicycles, motor vehicles, motorcycles, cars, trucks, buses, railed vehicles, trains, trams, watercraft, ships, boats, amphibious vehicles, screw-propelled vehicle, hovercraft, air vehicles, aircraft, airplanes, helicopters, and spacecraft.

In the present disclosure, aggregated trajectory data may be understood as data comprising trajectory information obtained from different trajectory sources of information, such as different or a variety of trajectory data sources, and wherein such trajectory information may have been aggregated. The trajectory data may comprise information about the vehicle state variables throughout a trajectory, data of the weather faced during trajectory by the vehicle and vehicle configuration data. The aggregated trajectory data provides a unique information which is considered as representing a trajectory for which multiple and varied data have been obtained or received. A set of aggregated trajectory data may be understood as aggregated trajectory data representing a trajectory for a vehicle, or a flight for an air vehicle, or more than one trajectory for a vehicle or an air vehicle. In some examples, two sets of aggregated trajectory data comprise, each set, aggregated trajectory data of separate flights of an air vehicle. In some examples, two sets of aggregated trajectory data comprise, each set, separate fights of separate air vehicles. Examples of possible actions performed for aggregating data will be explained further below.

One or more data blocks or blocks of data are generated from the aggregated trajectory data. Examples for generating a data block are explained further below. Such blocks compose or construct or form a blockchain if their content is considered valid. Such a blockchain may be stored in a blockchain database, also called blockchain vehicle trajectory database in the present disclosure.

For verifying that the data blocks comprise valid data, mining is performed. In the present disclosure, mining may involve blockchain miners which add trajectory data to a private or public blockchain. In a blockchain, data blocks are secured by blockchain miners and are connected to each other forming a chain. Blockchain operations are generally verified in decentralized systems wherein miners contribute with computing resources to verify the source of data or the data. The process of verifying trajectories is called mining and examples of mining are detailed further below. If mining a data block verifies that the block is data block comprising valid vehicle data, the methods of the present disclosure validate the data block for insertion or recording into a vehicle trajectory blockchain.

In the present disclosure, the term "blockchain" is utilized in relation to the vehicle trajectory blockchain where a blockchain may be understood as growing list of data records or data blocks hardened against tampering and revision and includes data structure blocks and optionally programs or executables. The growing list may continuously grow. Each data block contains a timestamp and information linking the block to a previous block where a "blockchain" consists of blocks that hold timestamped batches of valid data. Such valid data is provided by the method for validating a data block of the present disclosure. Each block may include a hash of the prior block linking the blocks together, where a "hash" is a hash function that is utilized to map data of arbitrary size to data of a fixed size. In order to add more security, a cryptographic hash function may be utilized that assists in verifying the authenticity of the entry in the block.

A vehicle trajectory blockchain may be stored in a blockchain vehicle trajectory database. A blockchain vehicle trajectory database may be understood as a database comprising trajectory data blocks or one or more trajectory data blockchains which have been validated by a blockchain miner. The blockchain vehicle trajectory database may structurally be composed of a type of a data storage device such as, for example, a solid-state memory, read-access memory ("RAM"), read-only memory ("ROM"), electromechanical storage device such as, for example, a hard-drive, or other equivalent devices or components. The blockchain vehicle trajectory database may include a database of organized collection of meta-data of trajectory related information that may include, for example, for a specific date and time: position, altitude, latitude, weather conditions, atmospheric temperature, etc. of a vehicle. The blockchain vehicle trajectory database may be a distributed database that may be linked to a network where the database includes a cryptographic hash of preceding records in the database and is accessible to users of the distributed database. As such, the blockchain vehicle trajectory database may include meta-data of the trajectory information about a vehicle, wherein a vehicle may be an air vehicle, or may be an aircraft. The blockchain vehicle trajectory database may include targeting location information e.g., the ending second location such as an airport, base, port, target, etc., and may also include spatial information about the geography and two and/or three-dimensional maps.

The method according to the present disclosure may further comprise inserting or adding or recording the data block in a vehicle trajectory blockchain wherein the vehicle trajectory blockchain comprises robust and accurate vehicle trajectory data representing vehicle trajectories. The method may further comprise storing the vehicle trajectory blockchain into a blockchain vehicle trajectory database. Both the vehicle trajectory blockchain and the blockchain vehicle trajectory database provide for organized data where vehicle trajectory information may be provided in an improved and simplified manner. In particular, vehicle trajectory information can be provided even in the case when a set of trajectory sources are unreliable or suffer disruption. The vehicle trajectory data or data block may be recorded in a blockchain vehicle trajectory database with an increased security against tampering.

In the present disclosure, providing aggregated trajectory data may be understood as providing data comprising trajectory information obtained from different trajectory sources of information, such as different or a variety of trajectory data sources, and wherein such trajectory information obtained from a variety of data sources may have been aggregated by any method such as:
- formatting different altitude positions information into homogeneous altitude positions information and/or
- formatting different fuel consumption data into homogeneous fuel consumption data, and/or
- arranging different noise fingerprint sets of data into an homogeneous or comparable noise fingerprint sets of data, and/or
- editing different sets of information relating to latitude positions into homogeneous latitude information sets, and/or
- combining data, weighing the combined data, and possibly adding some algorithmic calculation for homogenizing the weighed data;
- etc.

In some examples, providing one or more sets of aggregated trajectory data comprises generating aggregated trajectory data by a method comprising:
- receiving vehicle trajectory data, wherein vehicle trajectory data comprises data received from at least one trajectory data source;
- reconstructing vehicle trajectory data, providing one or more reconstructed trajectories; and
- fusing one or more reconstructed trajectories, providing aggregated trajectory data in one or more sets.

In some examples, receiving vehicle data trajectory comprises receiving one or more of
- tracking data comprising or more of latitude, and/or longitude, and/or altitude and/or time of flight of a vehicle; and/or
- kinematic data comprising one or more of airspeeds and/or ground speed of flight of a vehicle, and/or
- kinetic data comprising one or more of fuel consumption of flight of a vehicle and/or instantaneous vehicle mass.

In some examples, reconstructing vehicle or air vehicle data trajectory may comprise combining, results from a weather model, WM, and results from a vehicle performance model for generating a reconstructed trajectory. Reconstructing vehicle or air vehicle data trajectory may comprise combining: the trajectory data, results from a weather model, WM, and results from a vehicle performance model for generating a reconstructed trajectory.

A weather model, WM, may be understood as a model providing information about the evolution of one or more atmospheric variables in time in a geographic area. Such geographic area may be represented as a set of points in a 3D grid defined by latitude, longitude and altitude. The one or more atmospheric variables may comprise temperature, pressure, humidity, wind speed and direction.

A vehicle performance model may be understood a representation of an actual vehicle performance, which enables a computation of parameters of a vehicle. In the case where the vehicle is an aircraft, an air vehicle performance model or APM performance model may be understood as a representation of the actual air vehicle performance, for example an aircraft performance, which enables the computation of the drag, thrust and fuel consumption at a trajectory point as a function of flight conditions, such as altitude, speed and atmosphere temperature.

The combination of trajectory data, a weather model, WM, and a vehicle performance model, PM, may be performed to infer a full trajectory of an aircraft from surveillance data based, for example, on a 4D position.

In some examples air vehicle trajectory features, also referred to as state variables, may be received by any one of the methods according to the disclosure, for example, a latitude, a longitude, a height and a time of trajectory may be received: for example, 1500 feet, (41°, 33'N); (50°, 01'W), @23h12. The weather model WM may provide the speed of wind, pressure and direction for such air vehicle trajectory and the vehicle performance model, for example an air vehicle performance model, APM, may provide a speed in two or more points of the trajectory and cinematic values. With the trajectory data, such two or more points and the results of the weather model, a Trajectory Reconstruction Engine, TRE, may provide "reconstructed trajectory data" which in the present disclosure is complete vehicle or air vehicle trajectory data, as it will be further explained below.

A reconstruction of aircraft trajectory data may be computed by integrating a system of equations representing an Aircraft Motion Model, AMM. For some Air Traffic Management, ATM, applications, 3-degree-of-freedom systems may be well suited for such purpose. Information about the aircraft performance and weather and/or atmosphere conditions may be required for correctly referencing such 3-degree-of-freedom systems of equations. As previously said, a Trajectory Reconstruction Engine, TRE, may reconstruct vehicle data trajectory. The TRE is an engine to compute an actual full trajectory data, which may be air vehicle trajectory data, from a portion of data, for example, 4D positions of the trajectory, aided by a WM and an aircraft performance model, APM. The TRE may infer some aircraft state variables such as if an aircraft is using engine thrust, or if an aircraft has its flaps out, the rotation speed or any other parameter. The TRE may leverage received trajectory data to infer other additional aircraft state variables. For inferring such state variables from received data, methods according to the present disclosure may be based on a system of equations representing an Aircraft Motion Model, AMM, as explained, or may be based on Kalman filters or may be based on any other method related to modelling aircraft performance through adaptive aircraft performance models using actual flight recorded data. Such methods for inferring the state variables may model vehicle or air vehicle performance through adaptive vehicle performance models using actual trajectories data.

After reconstructing vehicle trajectory data the method provides a reconstructed trajectory or one or more reconstructed trajectories, wherein the one or more reconstructed trajectories are composed of one or more trajectory parameters such as speed and/or frequency of data acquisition, and/or fuel consumption for the vehicle, and/or CO2 emissions during the trajectory and/or noise footprint.

After providing one or more reconstructed trajectories, the methods of the present disclosure comprise fusing such one or more reconstructed trajectories. Fusing one or more reconstructed trajectories may be performed by a Trajectory Data Fusion Engine.

In some examples, fusing the reconstructed trajectories comprises at least one of the following actions:
- calculating a weighted average of parameters composing a set of trajectory reconstructions; and/or
- calculating a weighted average of parameters composing a set of trajectory reconstructions and correcting with an error based on radar track measures; and/or
- correlating a weighted average of parameters composing a set of trajectory reconstructions with actual recorded data from the vehicle.

Some examples of fusing reconstructed trajectories are described further below.

In some examples, the result of fusing the reconstructed trajectory is providing a set of aggregated trajectory data. In some examples, the result of fusing the reconstructed trajectory is providing a plurality of sets of aggregated trajectory data.

As seen, methods according to the disclosure may receive trajectory datasets representing a unique vehicle trajectory or flight provided by different considered trajectory sources. The information from each source may be enhanced by a Trajectory Reconstruction Engine, TRE, which may perform the reconstructing vehicle data trajectory and thereafter a Trajectory data Fusion Engine may fuse the reconstructed trajectory. In this way, any disparity of information provided by the different considered trajectory sources may be homogenized. Such fusing may provide one or more sets of aggregated trajectory data.

After providing one or more sets of aggregated trajectory data, the methods of the present disclosure comprise generating a data block from the one or more sets of aggregated trajectory data, such that the data block serves as input into a blockchain miner.

**A** data block may be understood in the present disclosure as a set of data representing different trajectories sharing a common feature, wherein a common feature may be a geographical area and/or a timeframe. For example, a data block may comprise information about at least part of all the flight trajectories in a common geographical area, for example, flight trajectories from a heliport in the Grand Canyon in Arizona, on 5th of April 2015 from 10am to 11pm, not necessarily performed by a same air vehicle. For example, a data block may comprise information about N flight trajectories with, for example, N=10, or N=100 or N=1000. In a further example, a data block may comprise information about at least part of all the flight trajectories in a common route, for example, flight trajectories from an airport in South Africa to an airport in New Zealand, on 23rd of November 2017. The set of data representing trajectories in a data block may be organized by a processing means as a matrix representation wherein each of the rows or columns, or more generally, each record, may represent a trajectory, for example, a flight in the case where the vehicle is an air vehicle such as a helicopter or an aircraft. In some examples, generating a data block from the one or more sets of aggregated trajectory data comprises generating:
- a header, wherein the header may contain information i.e. about the common feature or covered geographical area; and
- a hash of the header of a previous block in the blockchain.

Each generated data block may be composed of the generated header, the hash of the header of a previous block in the blockchain, and the set of trajectories, for example trajectory in a record.

The generation of a data block results in a block of a blockchain and a hash for such data block. When constructing the data block, a previous block is read in order to verify whether the chain presents a correct order; this prevents the blockchain from being corrupted. Exceptionally, a genesis block, being the first block of a block chain, is a case without reference to a previous block. The generated data block is to be added to a blockchain if the methods according to this disclosure validate the data block for insertion into a vehicle trajectory blockchain. Examples of validation and insertion of a data block into a blockchain may comprise any of the known methods in the art for chaining blocks of a data block into a blockchain.

After generating a data block from the one or more sets of aggregated trajectory data the methods of the present disclosure comprise mining the data block to verify whether the data block comprises valid vehicle data.

In some examples, mining the data block may be performed by a miner. In the present disclosure, a miner or data miner or blockchain miner may be understood as a processor or set of instructions configured to secure and verify vehicle trajectories or air vehicle trajectories. Advantageously, maintenance of the blockchain instead of maintaining individual databases by data owners may be the only maintenance requirement. A blockchain which is created from blocks mined by a data miner may be stored in a blockchain vehicle trajectory database. A blockchain vehicle trajectory database provides accessibility to aircraft trajectory data that have been accepted by a whole community of miners as the most accurate representation of actual operations.

In some examples, mining the data block to verify whether the data block comprises valid vehicle data comprises:
- processing the trajectory data included in the data block: both in public and private blockchain approaches, in this step the miner checks whether the received block is in fact the one corresponding to the following one to a previous block in the blockchain, avoiding corruption or manipulation or fraud. Such check may be performed by using or reading the hash; and/or
- confirming the trajectory data: in a public blockchain approach this step confirms that the given trajectories included in the data block to be inserted or added to the blockchain comply with a set of criteria that the blockchain may impose. If a trajectory does not comply with such criteria, the data block may be rejected. In some examples, the criteria are:
   - a given trajectory is possible for a vehicle or an air vehicle type, for example, speed is not 0 for a fix wing aircraft or the Mach Number -or ratio of the speed of a vehicle to the speed of sound- is below 1 for subsonic vehicles; and/or
   - a vehicle or aircraft identification is correct, i.e. the registration is for a real vehicle or aircraft; and/or
   - boundary limits or altitude is not negative, unless the blockchain includes underwater vehicles, latitude and longitude in range of 0 to 360 degrees or 90 to -90 degrees.
   In a private blockchain approach "confirming the trajectory data" may be skipped, since private systems may offer a minimum quality of service, QoS, such that the mining process may be lighter than in the case where public miners are involved. The blockchain may rely on a trusted publisher, wherein publisher may be understood as a navigation authority in a country, for example, the Federal Aviation Administration, FDA, in the USA, which may be obliged to provide a minimum QoS; and/or
- filtering data: advantageously, this step avoids adding data blocks to the blockchain if the blockchain is limited to a specific region or type of vehicles and a new block proposed for the blockchain includes trajectories which are not relevant for the blockchain. This may make sense in public blockchains where a block may be rejected for including non-relevant data. Continuing with the previous example, data blocks comprising data not belonging to a flight over the Grand Canyon in Arizona, on 5ht of April 2015 from 10am to 11am may be filtered out or rejected.

In response to verifying that the data block comprises valid vehicle data, the method comprises validating the data block for insertion into a vehicle trajectory blockchain. The method may further comprise inserting or adding or recording such block into a vehicle trajectory blockchain. The addition of a new data block into the blockchain may lead to an unrealistic representation of the trajectory: i.e., a dataset that does not represent a flyable trajectory, because every single datum may come from a different source. The steps of mining, processing, confirmation and filtering are therefore advantageous prior to adding, recording or storing the data block into the vehicle trajectory blockchain or, further, prior to adding the blockchain into a blockchain vehicle trajectory database. The mining step double-checks that the data block is realistic and filters data, i.e., removes data blocks or data points, to obtain a true representation of an actual trajectory. In general terms, it may be better to have a reduced dataset rather than an extended one in which some data could potentially be challenged.

After mining the data block, the methods of the present disclosure comprise, if the data block comprises valid vehicle data, validating the data block for insertion into a vehicle trajectory blockchain, wherein the vehicle trajectory blockchain comprises robust and accurate vehicle trajectory data representing vehicle trajectories. If the verification is not positive, then the data block is not validated for insertion into a blockchain vehicle trajectory database. If the verification is positive, the validation may comprise inserting a flag into the block representing a valid data block or may comprise storing the data block in a blockchain data base or may comprise sending the data block to a blockchain queue wherein data blocks await to be inserted into a blockchain or blockchain database.

In some examples, the method may comprise rejecting inaccurate vehicle data, wherein inaccurate vehicle data comprises one or more representations of vehicle trajectories which are not valid. In such examples if the data block does not comprise valid vehicle data, or in other words, examples if the data block comprises inaccurate vehicle data, the data block is not validated for insertion into a vehicle trajectory blockchain and the data block is rejected. In such examples, the data block is not validated for insertion into a vehicle trajectory blockchain. If the speed of a vehicle is negative, and/or if the geographical area covered by an air vehicle is outside of the geographical scope of interest, and/or any other criteria, the data block may be rejected.

In the case of using a public blockchain, the method may comprise an incentive mechanism for miners, such as individuals which record or store new data blocks into the blockchain. For example, every miner may obtain a token representing a type of remuneration or a token that may be used to get priority access to some advanced services. In the case of a private blockchain, e.g., owned by the Federal Aviation Administration, FAA, or the Single European Sky ATM Research, SESAR, then there may be dedicated miners set by the owner who may straightforwardly record data.

The miners may not only be responsible for validating data blocks, but also, they can be devoted to recording or storing new data blocks and to compute some specific tasks. For example, the miners may compute the difference between a datum coming from the aggregated trajectory data, e.g., the pressure and altitude at a specific time, and may select as true the one which is closer to the average values. Such strategy may be different for different state variables or different implementations of the methods of the present disclosure. Once this process is executed for at least part of all state variables from the beginning to the end of the trajectory, a potential trajectory data block to be added to a blockchain is ready.

The present disclosure further describes a vehicle trajectory blockchain comprising one or more data blocks validated by any of the methods for validating a data block of the present disclosure. In other words, the vehicle trajectory blockchain of the present disclosure may comprise a data block header, wherein the header may contain information i.e. about a common feature throughout different trajectories or covered geographical area, a hash of the header of a previous block in the blockchain, and a set of trajectories, wherein the trajectories are validated, for example by a miner. The described blockchain comprises therefore robust and accurate vehicle trajectory data representing vehicle trajectories.

In some examples, the methods of the present disclosure comprise
- inserting the data block in a vehicle trajectory blockchain, and
- retrieving vehicle trajectory data from the vehicle trajectory blockchain.

Such examples provide a method for determining a vehicle trajectory, comprising retrieving vehicle trajectory data from a vehicle trajectory blockchain.

Advantageously vehicle or air vehicle trajectory data may be retrieved such that it is ensured that the received or retrieved data is untampered and valid air vehicle trajectory data. The vehicle trajectory data may be retrieved by a retrieving system. Retrieving may be performed directly from the blockchain or from a blockchain vehicle trajectory database where one or more blockchains are stored, and where the vehicle trajectory data is ultimately retrieved from.

A method for retrieving an air vehicle trajectory data may comprise the steps of any one of the methods according to the present disclosure, wherein the vehicle is an air vehicle, for example an aircraft or helicopter. The method for retrieving an air vehicle trajectory data may comprise:
- validating a data block according to any one of the methods of the present disclosure, wherein the vehicle is an air vehicle;
- adding or recording the validated data block in an air vehicle trajectory blockchain, wherein the air vehicle trajectory blockchain comprises robust and accurate air vehicle trajectory data representing air vehicle trajectories; and
- retrieving air vehicle trajectory data from the air vehicle trajectory blockchain.

In some examples, the method for retrieving an air vehicle trajectory data may comprise:
- validating a data block according to any one of the methods of the present disclosure, wherein the vehicle is an air vehicle;
- adding or recording the validated data block in an air vehicle trajectory blockchain, wherein the air vehicle trajectory blockchain comprises robust and accurate air vehicle trajectory data representing air vehicle trajectories;
- storing the vehicle trajectory blockchain into an air vehicle trajectory database; and
- retrieving air vehicle trajectory data from the air vehicle trajectory database.

The present disclosure further describes a blockchain generation system comprising:
- a processor; and
- a memory in communication with the processor, the memory comprising computer-readable program instructions that, when executed by the processor cause the processor to perform any of the methods described in the present disclosure.

In some examples, the blockchain generation system comprises:
- a data block generation engine to generate a data block from one or more sets of aggregated trajectory data such that the data block serves as input into a blockchain miner;
- a blockchain miner to mine the data block to verify whether the data block comprises valid vehicle data and to, if the data block comprises valid vehicle data, validating the data block for addition into a vehicle trajectory blockchain; and
- an addition or recording module to, upon validating the data block for addition, add or record the data block in a vehicle trajectory blockchain, wherein the vehicle trajectory blockchain comprises robust and accurate vehicle trajectory data representing vehicle trajectories, wherein the addition module may be part of or be integrated in the blockchain miner.

In some examples, the blockchain generation system comprises
- a data block generation engine configured for generating a data block from one or more sets of aggregated trajectory data;
- a blockchain miner configured for mining the data block to verify whether the data block comprises valid vehicle data and to, if the data block comprises valid vehicle data, validate the data block for addition into a vehicle trajectory blockchain;
- an addition module configured for, upon validating the data block for addition, adding the data block in a vehicle trajectory blockchain; and
- a storing module for storing the vehicle trajectory blockchain into a vehicle trajectory database.

In some examples, the blockchain generation system may comprise an air vehicle trajectory retrieving system.

An air vehicle trajectory retrieving system may comprise:
- a retrieving processor; and
- a retrieving memory in communication with the retrieving processor, the retrieving memory comprising computer-readable program instructions that, when executed by the retrieving processor, cause the retrieving processor to retrieve air vehicle trajectory data from an air vehicle trajectory blockchain or from a blockchain air vehicle trajectory database, wherein the air vehicle trajectory blockchain and the air vehicle trajectory database comprise one or more data blocks validated by any one of the methods for validating a data block of the disclosure and wherein the vehicle is an air vehicle.

An air vehicle trajectory retrieving system may be a system using blockchain technology for the provision of trajectory information. A retrieving system may implement the steps of the methods described herein for retrieving air vehicle trajectory data from a blockchain air vehicle trajectory database, wherein the air vehicle trajectory database comprises one or more data blocks validated by any one of the methods for validating a data block described in the present disclosure.

As it may be apparent from the present disclosure, features such as a decentralized aircraft trajectory database supported by the blockchain may provide robust and universal access to accurate aircraft trajectory data representing actual trajectories. Furthermore, rejection of untrusted or inaccurate representations of actual trajectories may be provided by the methods of the present disclosure. In some examples, trajectory data reconstruction and fusion prior to recording data onto the blockchain is provided.

Some of the advantages provided by the methods and systems of the present disclosure are:
- access to a validated, accurate, aggregated, trusted and univocal representation of vehicle, such as air vehicle, trajectories;
- better management of traffic flows due to the availability of improved trajectory information;
- better capability to analyze incidents and accidents;
- better detection of air traffic infringements, i.e., violations of speed, altitude constraints and overflown of forbidden areas;
- capability of generating accurate performance-based analyses: in some traffic management environments, for example air traffic management, ATM, environments, fleets or airlines may be punished according to how close an actual trajectory was driven or flown with respect to the contracted trajectory. The methods of the present disclosure may avoid conflicts based on differences in the source data;
- unique historical database of trajectory data that may enable advanced analysis in the future; and
- accessibility to aircraft trajectory data that have been accepted by a whole community as the most accurate representation of actual operations.

The disclosed methods and systems may enable the development of a System Wide Information Management, SWIM, infrastructure that may be the core of future ATM environments. The current ATM systems may share information among ATM actors, i.e., ANSP, AOC, Air Traffic Control, ATC and the aircraft. The lack of trust of data sources, especially those providing trajectory information, may however preclude the implementation of most advanced capabilities. The disclosed methods and systems solve this problem and they may be potentially used worldwide by the ATM actors.

The features, functions, and advantages that have been discussed can be achieved independently in various examples or may be combined in yet other examples further details of which can be seen with reference to the following description and drawings.

### BRIEF DESCRIPTION OF THE FIGURES

FIG. 1 is a flow chart of an example of a method 100 according to the present disclosure.
FIG. 2 is a flow chart of an example of a method 100, which is implemented in an example blockchain generation system 200.
FIG. 3 is a flow chart of an example of a method 300 for providing one or more sets of aggregated trajectory data according to the present disclosure.
FIG. 4 is a flow chart of an example of a method 300 for providing, by a system 400, one or more sets of aggregated trajectory data according to the present disclosure.
FIG. 5 is an example system 500 for generating a blockchain comprising a processor 501 and a memory 502.
FIG. 6 is an example blockchain generation 600.
FIG 7. is an example air vehicle trajectory retrieving system 700.
FIG. 8 is a flow chart of an example of a method 800 according to the present disclosure.

### DETAILED DESCRIPTION

The following detailed description of examples refers to the accompanying drawings, which illustrate specific examples of the disclosure. Other examples having different structures and operations do not depart from the scope of the present disclosure. Reference numerals may refer to the same element or component in the different drawings.

The present disclosure may be implemented by a system, a method, and/or a computer program product. The computer program product may include a computer readable storage medium (or media) having computer readable program instructions thereon for causing a processor to carry out aspects of the present disclosure.

The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium includes the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer readable program instructions described herein can be downloaded to respective computing/processing devices from a computer readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network adapter card or network interface in each computing/processing device receives computer readable program instructions from the network and forwards the computer readable program instructions for storage in a computer readable storage medium within the respective computing/processing device.

Computer readable program instructions for carrying out operations of the present disclosure may be assembler instructions, instruction-set-architecture, or ISA, instructions, machine instructions, machine dependent instructions, microcode, firmware instructions, state-setting data, or either source code or object code written in any combination of one or more programming languages, including an object oriented programming language such as Smalltalk, C++ or the like, and procedural programming languages, such as the "C" programming language or similar programming languages. The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some examples, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the present disclosure.

Aspects of the present disclosure are described herein with reference to flowchart illustrations and/or block diagrams of methods, apparatus or systems, and computer program products according to examples of the disclosure. It will be understood that each block of the flowchart illustrations and/or block diagrams, and combinations of blocks in the flowchart illustrations and/or block diagrams, can be implemented by computer readable program instructions.

These computer readable program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer readable program instructions may also be stored in a computer readable storage medium that can direct a computer, a programmable data processing apparatus, and/or other devices to function in a particular manner, such that the computer readable storage medium having instructions stored therein comprises an article of manufacture including instructions which implement aspects of the function/act specified in the flowchart and/or block diagram block or blocks.

The computer readable program instructions may also be loaded onto a computer, other programmable data processing apparatus, or other device to cause a series of operational steps to be performed on the computer, other programmable apparatus or other device to produce a computer implemented process, such that the instructions which execute on the computer, other programmable apparatus, or other device implement the functions/acts specified in the flowchart and/or block diagram block or blocks.

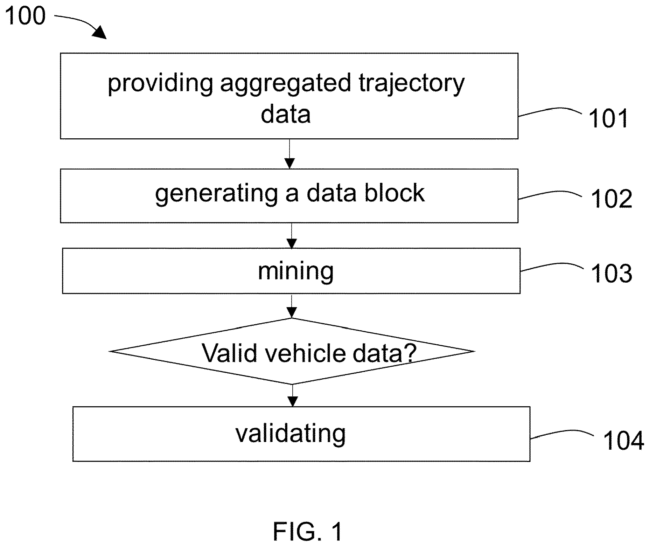

FIG. 1 is a flow chart of an example of a method 100 according to the present disclosure. In block 101 the method comprises providing one or more sets of aggregated trajectory data, a set of aggregated trajectory data comprising at least aggregated trajectory data defining a trajectory of a vehicle; in block 102 the method comprises generating a data block from the one or more sets of aggregated trajectory data, such that the data block serves as input into a blockchain miner; in block 103 the method comprises mining the data block to verify whether the data block comprises valid vehicle data; in block 104 the method comprises, if the data block comprises valid vehicle data, validating the data block for insertion into a vehicle trajectory blockchain.

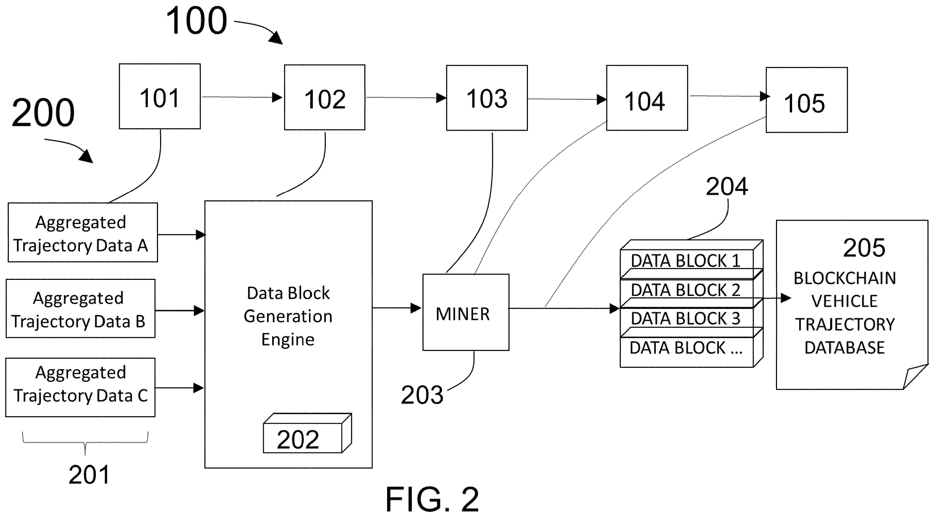

FIG. 2 is a flow chart of an example of a method 100, which is implemented in a blockchain generation system 200. In more detail, figure 2 shows:
- providing, 101, 3 sets, 201, of aggregated data, set "Aggregated trajectory data A", set "Aggregated trajectory data B" and set "Aggregated trajectory data C"; wherein the 3 sets, in the example of figure 2 correspond to 3 different trajectories from Aggeneys Airport to Auckland Airport on the 5th of April 2014:
   - Aggregated trajectory data A comprises: Trajectory: Aggeneys Airport to Auckland Airport; 5th April 2014@10h; aggregated freq data A; aggregated fuel consumption A; aggregated speed A; aggregated emissions A; aggregated net thrust A; aggregated noise footprint A; aggregated Pressure A, aggregated Speed of wind A, aggregated maximum altitude A;
   - Aggregated trajectory data B comprises: Trajectory: Aggeneys Airport to Auckland Airport; 5th April 2014@11h; freq_Data B; consumption B; noise footprint B; speed B; emissions B; net thrust B;
   - Aggregated trajectory data C comprises: Trajectory: Aggeneys Airport to Auckland Airport; 5th April 2014@12h; freq_Data C; fuel consumption C; noise footprint C; speed C; emissions C; net thrust C;
- generating 102 a data block 202 from the 3 sets of aggregated trajectory data 201;
- mining 103, by a miner 203 the data block to verify whether the data block comprises valid vehicle data;
- if the data block comprises valid vehicle data, validating 104, by the miner 203, the data block for insertion or addition into a vehicle trajectory blockchain 204;
- adding 105 the data block into the vehicle trajectory blockchain 204; and
- storing the blockchain into a blockchain vehicle trajectory database 205.

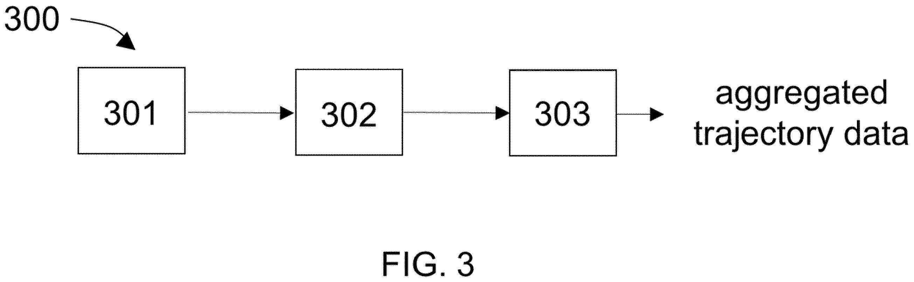

FIG. 3 is a flow chart of an example of a method 300 for providing one or more sets of aggregated trajectory data according to the present disclosure. The method 300 comprises in block 301, receiving vehicle trajectory data, wherein vehicle trajectory data comprises data received from at least one trajectory data source. The method 300 comprises, in block 302, reconstructing vehicle trajectory data, providing reconstructed trajectory. The method 300 comprises, in block 303, fusing the reconstructed trajectory, providing aggregated trajectory data in one or more sets.

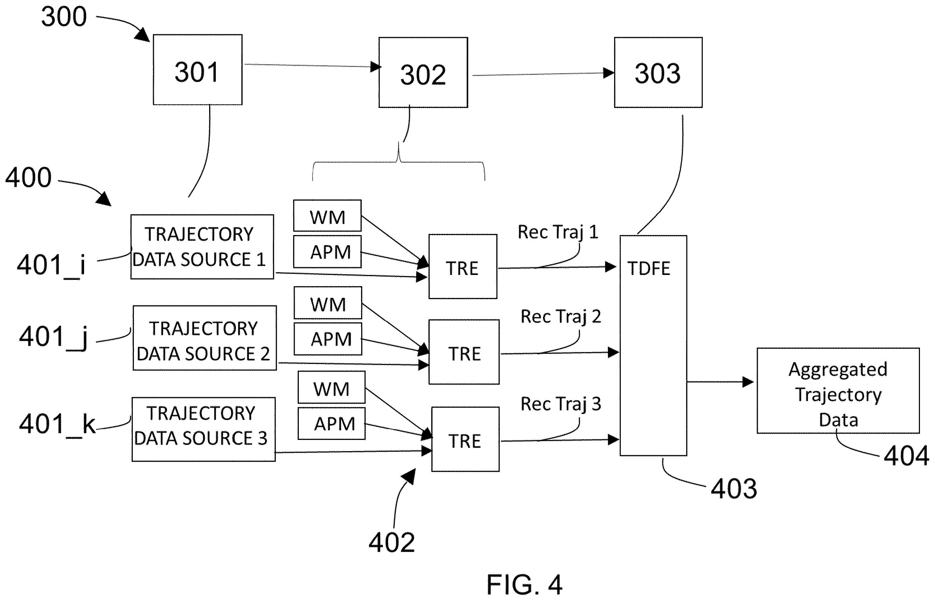

FIG. 4 is a flow chart of an example of a method 300 for providing, by a system 400, one or more sets of aggregated trajectory data according to the present disclosure. FIG.4 shows
- receiving 301 vehicle trajectory data, wherein vehicle data trajectory comprises data received from 3 trajectory data sources: trajectory data source 1, 401_i, trajectory data source 2, 401_j, and trajectory data source 3, 401_k;
- reconstructing 302 vehicle trajectory data, providing 3 reconstructed trajectories: Rec Traj 1, Rec Traj 2, and Rec Traj 3 by the 3 shown Trajectory Reconstruction Engines, TRE 402, wherein each TRE 402 receives: the trajectory data from a corresponding trajectory data source, results from a weather model WM and results from a vehicle performance model, which may be an air vehicle performance model APM in the case where the vehicle is an air vehicle;
- fusing 303 the 3 reconstructed trajectories by a Trajectory Data Fusion Engine TDFE 403, providing one or more sets of aggregated trajectory data 404.

Some examples of providing one or more sets of aggregated trajectory data A, defining the previously seen Trajectory: Aggeneys Airport to Auckland Airport; 5th April 2014@10h may comprise:

First, vehicle trajectory data for a same trajectory are received 301:
- trajectory data source 1, 401_i: freq_Data_1; fuel consumption_1; speed_1; emissions_1; net thrust_1;
- trajectory data source 2, 401_j: fuel consumption_2; noise footprint_2; speed_2; emissions_2;
- trajectory data source 3, 401_k: freq_Data 3; fuel consumption_3; noise footprint_3; net thrust_3.

As seen, trajectory data sources 1, 2 and 3 provide different state variables for a same trajectory and for a same air vehicle, i.e. trajectory data source 1 and 3 provide different net thrust and trajectory data source 2 does not provide a net thrust.

Secondly, the TREs 402, based on the trajectory data, the results from the weather model WM and the results from an air vehicle performance model APM, provide 3 reconstructed trajectories, wherein some of the state variables are inferred, some other state variables are completed, and other state variables may add information missing in the source trajectory data. Examples of Reconstructed trajectories comprising different state variables are the following, wherein a state variable may comprise a value or a set of values, structured as data vector or data matrix, etc.:
- Rec Traj 1: Speed, Pressure, Speed of wind, maximum altitude, freq_Data_1; fuel consumption_1; speed_1; emissions_1; net thrust_1; wherein the Speed, Pressure, Speed of wind and maximum altitude may have been inferred by the TRE;
- Rec Traj 2: fuel consumption 2; noise footprint_2; speed_2; emissions_2; Pressure, Speed of wind, maximum altitude;
- Rec Traj 3: freq_Data 3; fuel consumption_3; noise footprint_3; net thrust_3; Pressure, Speed of wind, maximum altitude.

Finally, the set A of aggregated trajectory data 404 is provided by fusing 303, by the Trajectory Data Fusion Engine, TDFE 403, the 3 reconstructed trajectories, by, for example, averaging the values shown in the 3 reconstructed trajectories:
- aggregated freq data A= average (freq_Data_1, freq_Data_3);
- aggregated fuel consumption A= average (fuel consumption_1, fuel consumption_2, fuel consumption_3);
- aggregated speed A= average (speed_1, speed_2);
- aggregated emissions A= average (emissions_1, emissions_2) ;
- aggregated net thrust A= average (net thrust_1, net thrust_3);
- aggregated noise footprint A = average (noise footprint_2, noise footprint_3).

Such that the provided set aggregated trajectory data A is:
Aggregated trajectory data A = aggregated freq data A; aggregated fuel consumption A; aggregated speed A; aggregated emissions A; aggregated net thrust A; aggregated noise footprint A; aggregated Pressure A, aggregated Speed of wind A, aggregated maximum altitude A.

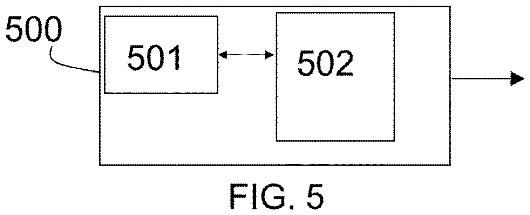

FIG 5. is an example system 500 for generating a blockchain comprising a processor 501 and a memory 502.

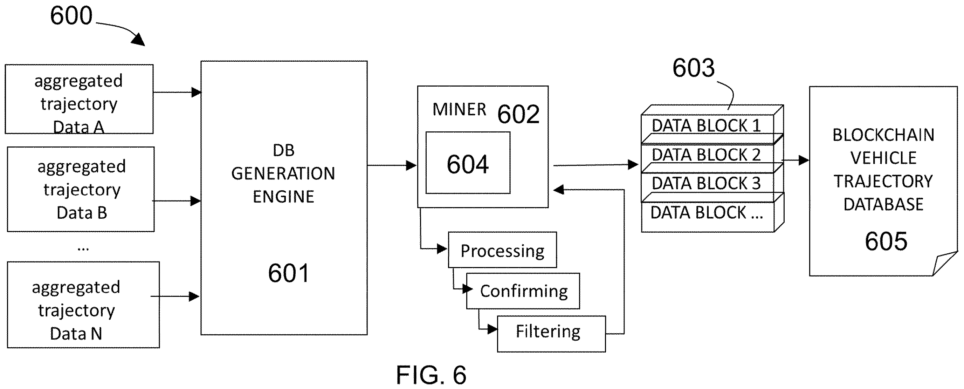

Fig. 6 is an example blockchain generation system 600 comprising:
- a data block generation engine 601 to generate a data block from N sets of aggregated trajectory data, such that the data block serves as input into a blockchain miner 602;
- a blockchain miner 602 configured to mine the data block to verify whether the data block comprises valid vehicle data and to, if the data block comprises valid vehicle data, validating the data block for addition into a vehicle trajectory blockchain 603;
- an addition module 604 to, upon validating the data block for addition, add the data block in a vehicle trajectory blockchain 603, wherein the addition module 604 is integrated in the miner 602.

As seen in figure 6, the miner 602 further comprises a processing module for processing trajectory data included in data blocks as explained in the present disclosure, a confirmation module configured to confirm the trajectory data included in data blocks as explained in the present disclosure and a filtering module for filtering data as explained in the present disclosure. For example, it may be validated that the set of data respect the minimum frequency of data points, for example, 1 data point per second, or it may be validated that the dispersion of the data is below a threshold.

The example system of figure 6 also shows a blockchain vehicle trajectory database 605 where the blockchain 603 may be stored.

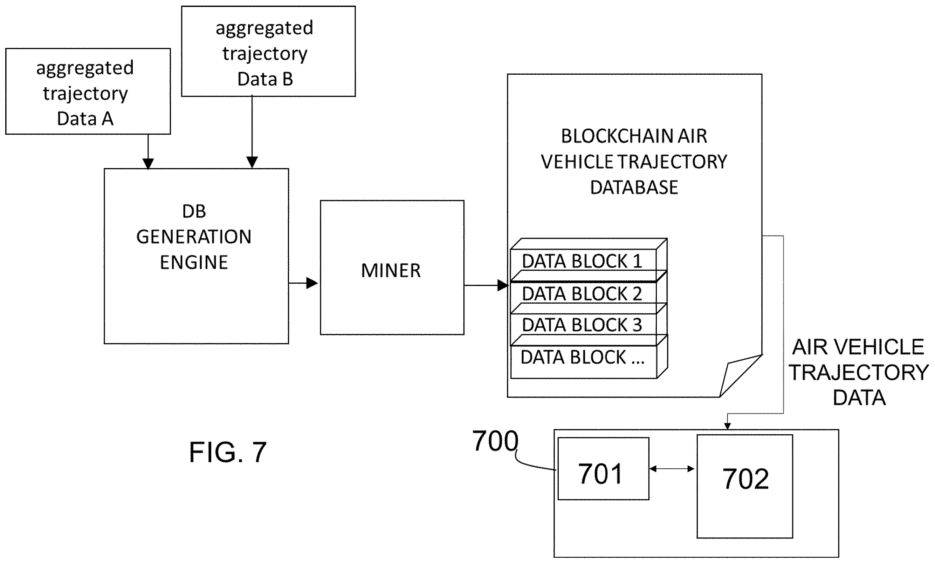

FIG 7. is an example an air vehicle trajectory retrieving system 700 comprising:
- a retrieving processor 701;
- a retrieving memory 702 in communication with the retrieving processor, the retrieving memory comprising computer-readable program instructions that, when executed by the retrieving processor, cause the retrieving processor to retrieve air vehicle trajectory data from a blockchain air vehicle trajectory database, wherein the air vehicle trajectory database comprises one or more data blocks validated by any of the methods of the present disclosure wherein the vehicle is an air vehicle.

Advantageously, the air vehicle trajectory data retrieved by the air vehicle trajectory retrieving system 700 is air vehicle data with a security against tampering. Such air vehicle data, for example aircraft data, comprises timestamped batches of valid data.

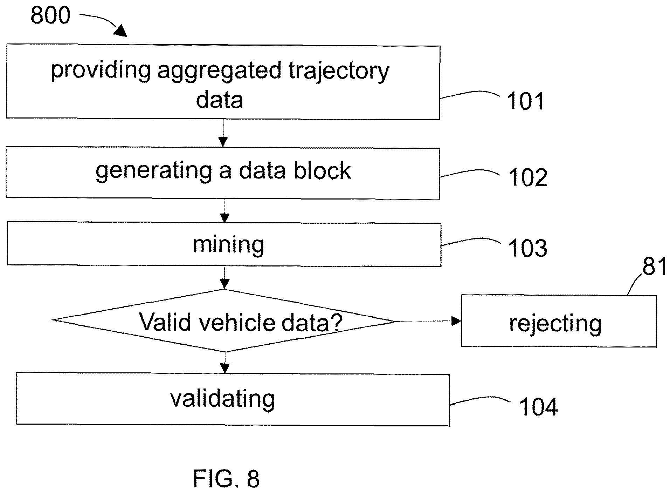

FIG. 8 is a flow chart of an example of a method 800 according to the present disclosure. The method 800 of figure 8 comprises, in block 101, providing one or more sets of aggregated trajectory data, a set of aggregated trajectory data comprising at least aggregated trajectory data defining a trajectory of a vehicle; in block 102 the method comprises generating a data block from the one or more sets of aggregated trajectory data, such that the data block serves as input into a blockchain miner; in block 103 the method comprises mining the data block to verify whether the data block comprises valid vehicle data; in block 104 the method comprises, if the data block comprises valid vehicle data, validating the data block for insertion into a vehicle trajectory blockchain; in block 81 the method comprises, if the data block does not comprise valid vehicle data, or in other words, if the data block comprises inaccurate or invalid vehicle data, rejecting 81 the data block for storage into a vehicle trajectory blockchain.

Further, the disclosure comprises examples according to the following clauses.

Clause 1. A computer implemented method for validating a data block for insertion into a vehicle trajectory blockchain comprising the steps of:
- providing one or more sets of aggregated trajectory data, a set of aggregated trajectory data comprising at least aggregated trajectory data defining one or more trajectories of one or more vehicles;
- generating a data block from the one or more sets of aggregated trajectory data;
- mining the data block to verify whether the data block comprises valid vehicle data;
- if the data block comprises valid vehicle data, validating the data block for insertion into a vehicle trajectory blockchain.

Clause 2. The method of clause 1 further comprising inserting the data block in a vehicle trajectory blockchain, wherein the vehicle trajectory blockchain comprises robust and accurate vehicle trajectory data representing vehicle trajectories.

Clause 3. The method of clause 1 wherein providing one or more sets of aggregated trajectory data comprises generating aggregated trajectory data by a method comprising:
- receiving vehicle trajectory data, wherein vehicle data trajectory comprises data received from at least one trajectory data source;
- reconstructing vehicle trajectory data, providing one or more reconstructed trajectories;
- fusing one or more reconstructed trajectories, providing aggregated trajectory data in one or more sets.

Clause 4. The method of clause 3 wherein receiving vehicle data trajectory comprises receiving one or more of
- tracking data comprising or more of latitude, and/or longitude, and/or altitude and/or time of flight of a vehicle; and/or
- kinematic data comprising one or more of airspeeds and/or ground speed of flight of a vehicle, and/or
- kinetic data comprising one or more of fuel consumption of flight of a vehicle and/or instantaneous vehicle mass.

Clause 5. The method of clause 3 wherein reconstructing vehicle data trajectory comprises combining results from a weather model and results from a vehicle performance model for generating a reconstructed trajectory.

Clause 6. The method of clause 3 wherein fusing the reconstructed trajectory, comprises at least one of:
- calculating a weighted average of parameters composing a set of trajectory reconstructions; and/or
- calculating a weighted average of parameters composing a set of trajectory reconstructions and correcting with an error based on radar track measures; and/or
- correlating a weighted average of parameters composing a set of trajectory reconstructions with actual recorded data from the vehicle.

Clause 7. The method of clause 1 wherein generating a data block from the one or more sets of aggregated trajectory data comprises generating a header; and a hash of the header of a previous block in the blockchain.

Clause 8. The method of clause 1 wherein mining the data block to verify whether the data block comprises valid vehicle data comprises:
- processing the trajectory data included in the data block; and/or
- verifying the trajectory data; and/or
- filtering data.

Clause 9. The method of clause 1 further comprising rejecting inaccurate vehicle data, wherein inaccurate vehicle data comprises one or more representations of vehicle trajectories which are not valid.

Clause 10. The method of clause 1, further comprising remunerating a mining entity performing the mining.

Clause 11. The method of clause 1, wherein the mining is performed by a miner, and the method further comprises obtaining a token by the miner, wherein the token represents a remuneration.

Clause 12. The method of clause 1 further comprising
- inserting the data block in a vehicle trajectory blockchain, wherein the vehicle trajectory blockchain comprises robust and accurate 1vehicle trajectory data representing vehicle trajectories
- retrieving vehicle trajectory data from a vehicle trajectory blockchain, wherein the blockchain.

Clause 13. The method of clause 1 further comprising adding the validated data block in a vehicle trajectory blockchain and retrieving air vehicle trajectory data from the air vehicle trajectory blockchain.

Clause 14. The method of clause 1 further comprising storing the validated data block in a blockchain vehicle trajectory database.

Clause 15. A blockchain generation system comprising:
- a processor; and
- a memory in communication with the processor, the memory comprising computer-readable program instructions that, when executed by the processor cause the processor to perform the method of clause 1.

Clause 16. The blockchain generation system of clause 15 comprising:
- a data block generation engine to generate a data block from one or more sets of aggregated trajectory data;
- a blockchain miner to mine the data block to verify whether the data block comprises valid vehicle data and to, if the data block comprises valid vehicle data, validate the data block for addition into a vehicle trajectory blockchain;
- an addition module to, upon validating the data block for addition, add the data block in a vehicle trajectory blockchain, wherein the vehicle trajectory blockchain comprises robust and accurate vehicle trajectory data representing vehicle trajectories.

Clause 17. The blockchain generation system of clause 15 comprising
- a data block generation engine to generate a data block from one or more sets of aggregated trajectory data;
- a blockchain miner to mine the data block to verify whether the data block comprises valid vehicle data and to, if the data block comprises valid vehicle data, validate the data block for addition into a vehicle trajectory blockchain;
- an addition module to, upon validating the data block for addition, add the data block in a vehicle trajectory blockchain, wherein the vehicle trajectory blockchain comprises robust and accurate vehicle trajectory data representing vehicle trajectories; and
- a storing module to store the blockchain in a blockchain vehicle trajectory database.

Clause 18. An aircraft trajectory retrieving system comprising:
- a retrieving processor; and
- a retrieving memory in communication with the retrieving processor, the retrieving memory comprising computer-readable program instructions that, when executed by the retrieving processor, cause the retrieving processor to retrieve air vehicle trajectory data from an aircraft trajectory database, wherein the aircraft trajectory database comprises one or more data blocks validated by the method for validating a data block according to clause 1 and wherein the vehicle is an aircraft.

Clause 19. The aircraft trajectory retrieving system of clause 18 comprising:
- a data block generation engine to generate a data block from one or more sets of aggregated aircraft trajectory data;
- a blockchain miner to mine the data block to verify whether the data block comprises valid aircraft data and to, if the data block comprises valid aircraft data, validate the data block for addition into a vehicle trajectory blockchain; and
- an addition module to, upon validating the data block for addition, add the data block in an aircraft trajectory blockchain.

Clause 20. The aircraft trajectory retrieving system of clause 18 comprising
- a data block generation engine to generate a data block from one or more sets of aggregated aircraft trajectory data;
- a blockchain miner to mine the data block to verify whether the data block comprises valid aircraft data and to, if the data block comprises valid aircraft data, validate the data block for addition into a vehicle trajectory blockchain;
- an addition module to, upon validating the data block for addition, add the data block in an aircraft trajectory blockchain;
- a storing module to store the blockchain in a blockchain aircraft trajectory database.

The flowchart and block diagrams in the figures illustrate the architecture, functionality, and operation of possible implementations of systems, methods, and computer program products according to various examples of the present disclosure. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

The terminology used herein is for the purpose of describing particular examples and is not intended to be limiting of examples of the disclosure. As used herein, the singular forms "a", "an" and "the" are intended to include the plural forms as well, unless the context clearly indicates otherwise. It will be further understood that the terms "include," "includes," "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The corresponding structures, materials, acts, and equivalents of all means or step plus function elements in the claims below are intended to include any structure, material, or act for performing the function in combination with other claimed elements as specifically claimed. The description of the present examples has been presented for purposes of illustration and description but is not intended to be exhaustive or limited to examples in the form disclosed. Many modifications and variations will be apparent to those of ordinary skill in the art without departing from the scope and spirit of examples.

Although specific examples have been illustrated and described herein, those of ordinary skill in the art appreciate that any arrangement which is calculated to achieve the same purpose may be substituted for the specific examples shown and that the examples have other applications in other environments. This application is intended to cover any adaptations or variations. The following claims are in no way intended to limit the scope of examples of the disclosure to the specific examples described herein. The scope of protection is defined by the claims.

## Claims

1. A computer implemented method (100) for validating a data block for insertion into a vehicle trajectory blockchain comprising the steps of:
- providing (101) one or more sets of aggregated trajectory data (201), a set of aggregated trajectory data comprising at least aggregated trajectory data defining one or more trajectories of one or more vehicles; the aggregated trajectory data comprising trajectory information obtained from a variety of trajectory data sources (401_i, 401_j, 401_k), and wherein such trajectory information has been aggregated (404);
wherein providing (101) one or more sets of aggregated trajectory data comprises generating the aggregated trajectory data by a method (300) comprising:
- receiving (301) vehicle trajectory data, wherein vehicle data trajectory comprises data received from the variety of trajectory data sources (401_i, 401_j, 401_k);
- reconstructing (302) the vehicle trajectory data, providing one or more reconstructed trajectories; and
- fusing (303) the one or more reconstructed trajectories, providing aggregated trajectory data (404) in one or more sets;
- generating (102) a data block (202) from the one or more sets of aggregated trajectory data (201);
- mining (103) the data block to verify whether the data block comprises valid vehicle data; and
- if the data block comprises valid vehicle data, validating (104) the data block for insertion into a vehicle trajectory blockchain.

2. The method (100) of claim 1 further comprising inserting (105) the data block in a vehicle trajectory blockchain (204), wherein the vehicle trajectory blockchain comprises robust and accurate vehicle trajectory data representing vehicle trajectories.

3. The method (100) of claim 1 wherein receiving (301) the vehicle data trajectory comprises receiving one or more of
- tracking data comprising or more of latitude, and/or longitude, and/or altitude and/or time of flight of a vehicle; and/or
- kinematic data comprising one or more of airspeeds and/or ground speed of flight of a vehicle, and/or
- kinetic data comprising one or more of fuel consumption of flight of a vehicle and/or instantaneous vehicle mass.

4. The method (100) of claim 1 wherein reconstructing (302) vehicle data trajectory comprises combining results from a weather model and results from a vehicle performance model for generating a reconstructed trajectory.

5. The method (100) of claim 1 wherein fusing (303) the one or more reconstructed trajectories, comprises at least one of:
- calculating a weighted average of parameters composing a set of trajectory reconstructions; and/or
- calculating a weighted average of parameters composing a set of trajectory reconstructions and correcting with an error based on radar track measures; and/or
- correlating a weighted average of parameters composing a set of trajectory reconstructions with actual recorded data from the vehicle.

6. The method (100) of claim 1 wherein generating (102) a data block from the one or more sets of aggregated trajectory data comprises generating a header and a hash of the header of a previous block in the blockchain.

7. The method (100) of claim 1 wherein mining (103) the data block to verify whether the data block comprises valid vehicle data comprises:
- processing the trajectory data included in the data block; and/or
- confirming the trajectory data; and/or
- filtering data.

8. The method (100) of claim 1 further comprising rejecting (81) inaccurate vehicle data, wherein inaccurate vehicle data comprises one or more representations of vehicle trajectories which are not valid.

9. The method (100) of claim 1 comprising
- inserting (105) the data block in a vehicle trajectory blockchain (204), and
- retrieving vehicle trajectory data from the vehicle trajectory blockchain (204).

10. The method (100) of claim 1 wherein the one or more vehicles is one or more air vehicles or one or more aircrafts.

11. A blockchain generation system (500) comprising:
- a processor (501);
- a memory (502) in communication with the processor (501), the memory comprising computer-readable program instructions that, when executed by the processor cause the processor to perform the method of claim 1.

12. The blockchain generation system (200, 600) of claim 11 comprising:
- a data block generation engine (202, 601) configured for generating a data block from one or more sets of aggregated trajectory data (201, 404); the aggregated trajectory data comprising trajectory information obtained from a variety of trajectory data sources (401_i, 401_j, 401_k), and wherein such trajectory information has been aggregated (404);
- a blockchain miner (203, 602) configured for mining the data block to verify whether the data block comprises valid vehicle data and configured for, if the data block comprises valid vehicle data, validating (104) the data block for addition into a vehicle trajectory blockchain (603); and
- an addition module (204) configured for, upon validating (104) the data block for addition, adding the data block in a vehicle trajectory blockchain (204, 603), wherein the vehicle trajectory blockchain comprises robust and accurate vehicle trajectory data representing vehicle trajectories.

13. The blockchain generation system (200, 600) of claim 11 comprising:
- a data block generation engine (202, 601) configured for generating a data block from one or more sets of aggregated trajectory data (201);
- a blockchain miner (203, 602) configured for mining the data block to verify whether the data block comprises valid vehicle data and to, if the data block comprises valid vehicle data, validate (104) the data block for addition into a vehicle trajectory blockchain (603);
- an addition module (204) configured for, upon validating (104) the data block for addition, adding the data block in a vehicle trajectory blockchain (204, 603); and
- a storing module configured for storing the vehicle trajectory blockchain into a vehicle trajectory database.

14. The blockchain generation system (200, 600) of claim 11 comprising a trajectory reconstruction engine, TRE (402), to reconstruct (302) vehicle data trajectory combining results from a weather model (WM) and results from a vehicle performance model for generating a reconstructed trajectory.

15. The blockchain generation system (200, 600) of claim 11 wherein the one or more vehicles is one or more air vehicles or one or more aircrafts.

## Patentansprüche

1. Ein computerimplementiertes Verfahren (100) zum Validieren eines Datenblocks zum Einfügen in eine Fahrzeugtrajektorienblockchain, das die folgenden Schritte umfasst:
- bereitstellen (101) einer oder mehrerer Mengen von aggregierten Trajektoriedaten (201), wobei eine Menge von aggregierten Trajektoriedaten mindestens aggregierte Trajektoriedaten umfasst, die eine oder mehrere Trajektorien eines oder mehrerer Fahrzeuge definieren; wobei die aggregierten Trajektoriedaten Trajektorieinformationen umfassen, die aus einer Vielzahl von Trajektoriedatenquellen (401_i, 401_j, 401_k) erhalten worden sind, und wobei diese Trajektorieinformationen aggregiert (404) worden sind;
wobei das Bereitstellen (101) einer oder mehrerer Mengen aggregierter Trajektoriendaten das Erzeugen der aggregierten Trajektoriendaten durch ein Verfahren (300) umfasst, das Folgendes umfasst:
- empfangen (301) von Fahrzeugtrajektoriendaten, wobei die Fahrzeugdatentrajektorie Daten umfasst, die von der Vielzahl von Trajektoriendatenquellen (401_i, 401_j, 401_k) empfangen werden;
- rekonstruieren (302) der Fahrzeugtrajektoriendaten, Bereitstellen einer oder mehrerer rekonstruierter Trajektorien; und
- verschmelzen (303) der einen oder mehreren rekonstruierten Trajektorien, wodurch aggregierte Trajektoriendaten (404) in einem oder mehreren Mengen bereitgestellt werden;
- erzeugen (102) eines Datenblocks (202) aus dem einen oder den mehreren Mengen aggregierter Trajektoriendaten (201);
- mining (103) des Datenblocks, um zu überprüfen, ob der Datenblock gültige Fahrzeugdaten umfasst; und
- wenn der Datenblock gültige Fahrzeugdaten umfasst, validieren (104) des Datenblocks zum Einfügen in eine Fahrzeugtrajektorienblockchain.

2. Das Verfahren (100) von Anspruch 1, ferner umfassend das Einfügen (105) des Datenblocks in eine Fahrzeugtrajektorienblockchain (204), wobei die Fahrzeugtrajektorienblockchain robuste und genaue Fahrzeugtrajektoriendaten umfasst, die Fahrzeugtrajektorien darstellen.

3. Das Verfahren (100) von Anspruch 1, wobei das Empfangen (301) der Fahrzeugdatentrajektorie das Empfangen umfasst von einem oder mehreren von
- Verfolgungsdaten umfassend oder mehrere von dem Breitengrad und/oder der Länge und/oder der Höhe und/oder der Flugzeit eines Fahrzeugs; und/oder
- kinematischen Daten umfassend eine oder mehrere von Fluggeschwindigkeiten (*Airspeeds*) und/oder der Geschwindigkeit über Grund des Fluges eines Fahrzeugs, und/oder
- kinetischen Daten umfassend einen oder mehrere von dem Kraftstoffverbrauch des Flugs eines Fahrzeugs und/oder der momentanen Fahrzeugmasse.

4. Das Verfahren (100) von Anspruch 1, wobei das Rekonstruieren (302) der Fahrzeugdatentrajektorie das Kombinieren von Ergebnissen von einem Wettermodell und Ergebnissen von einem Fahrzeugleistungsmodell zum Erzeugen einer rekonstruierten Trajektorie umfasst.

5. Das Verfahren (100) von Anspruch 1, wobei das Verschmelzen (303) der einen oder mehreren rekonstruierten Trajektorien mindestens eines von den Folgenden umfasst:
- berechnen eines gewichteten Durchschnitts von Parametern, die eine Menge von Trajektorienrekonstruktionen zusammenstellen; und/oder
- berechnen eines gewichteten Durchschnitts von Parametern, die eine Menge von Trajektorienrekonstruktionen zusammenstellen und korrigieren mit einem Fehler auf der Grundlage von Radarverfolgungsmessungen; und/oder
- korrelieren eines gewichteten Durchschnitts von Parametern, die eine Menge von Trajektorienrekonstruktionen zusammenstellen, mit tatsächlichen aufgezeichneten Daten von dem Fahrzeug.

6. Das Verfahren (100) von Anspruch 1, wobei das Erzeugen (102) eines Datenblocks aus der einen oder den mehreren Mengen von aggregierten Trajektoriendaten das Erzeugen von einem Header und einem *Hash* des Headers eines vorherigen Blocks in der Blockchain umfasst.

7. Das Verfahren (100) von Anspruch 1, wobei das Mining (103) des Datenblocks, um zu überprüfen, ob der Datenblock gültige Fahrzeugdaten umfasst, Folgendes umfasst:
- verarbeiten der im Datenblock enthaltenen Trajektoriendaten; und/oder
- bestätigen der Trajektoriendaten; und/oder
- filtern von Daten.

8. Das Verfahren (100) von Anspruch 1, ferner umfassend das Zurückweisen (81) von ungenauen Fahrzeugdaten, wobei ungenaue Fahrzeugdaten eine oder mehrere Darstellungen von Fahrzeugtrajektorien umfassen, welche nicht gültig sind.

9. Das Verfahren (100) von Anspruch 1, umfassend
- einfügen (105) des Datenblocks in eine Fahrzeugtrajektorienblockchain (204), und
- abrufen von Fahrzeugtrajektoriendaten aus der Fahrzeugtrajektorienblockchain (204).

10. Das Verfahren (100) von Anspruch 1, wobei das eine oder die mehreren Fahrzeuge ein oder mehrere Luftfahrzeuge oder ein oder mehrere Flugzeuge sind.

11. Ein Blockchainerzeugungssystem (500) umfassend:
- einen Prozessor (501);
- einen Speicher (502) in Kommunikation mit dem Prozessor (501), wobei der Speicher computerlesbare Programmanweisungen umfasst, die, wenn sie von dem Prozessor ausgeführt werden, den Prozessor dazu veranlassen, das Verfahren von Anspruch 1 durchzuführen.

12. Das Blockchainerzeugungssystem (200, 600) von Anspruch 11, umfassend:
- eine Datenblockerzeugungsmaschine (202, 601), die zum Erzeugen eines Datenblocks aus einem oder mehreren Mengen von aggregierten Trajektoriendaten (201, 404) konfiguriert ist; wobei die aggregierten Trajektoriendaten Trajektorieninformationen umfassen, die aus einer Vielzahl von Trajektoriendatenquellen (401_i, 401_j, 401_k) erhalten worden sind, und wobei diese Trajektorieninformationen aggregiert (404) worden sind;
- einen Blockchain-Miner (203, 602), der zum Mining des Datenblocks konfiguriert ist, um zu überprüfen, ob der Datenblock gültige Fahrzeugdaten umfasst, und der zum Validieren (104) des Datenblocks zur Addition zu einer Fahrzeugtrajektorienblockchain (603) konfiguriert ist, wenn der Datenblock gültige Fahrzeugdaten umfasst; und
- ein Additionsmodul (204), das dazu konfiguriert ist, nach dem Validieren (104) des Datenblocks zur Addition, den Datenblock in eine Fahrzeugtrajektorienblockchain (204, 603) zu addieren, wobei die Fahrzeugtrajektorienblockchain robuste und genaue Fahrzeugtrajektoriendaten umfasst, die Fahrzeugtrajektorien darstellen.

13. Das Blockchainerzeugungssystem (200, 600) von Anspruch 11, umfassend:
- eine Datenblockerzeugungsmaschine (202, 601), die zum Erzeugen eines Datenblocks aus einem oder mehreren Mengen von aggregierten Trajektoriendaten (201) konfiguriert ist;
- einen Blockchain-Miner (203, 602), der zum Mining des Datenblocks konfiguriert ist, um zu überprüfen, ob der Datenblock gültige Fahrzeugdaten umfasst, und um den Datenblock zur Addition in eine Fahrzeugtrajektorienblockchain (603) zu validieren (104), wenn der Datenblock gültige Fahrzeugdaten umfasst;
- ein Additionsmodul (204), das dazu konfiguriert ist, nach dem Validieren (104) des Datenblocks zur Addition, den Datenblock in eine Fahrzeugtrajektorienblockchain (204, 603) zu addieren; und
- ein Speichermodul, das zum Speichern der Fahrzeugtrajektorienblockchain in einer Fahrzeugtrajektoriendatenbank konfiguriert ist.

14. Das Blockchainerzeugungssystem (200, 600) von Anspruch 11 umfassend eine Trajektorienrekonstruktionsmaschine (*trajectory reconstruction engine*), TRE (402), um Fahrzeugdatentrajektorie zu rekonstruieren (302), indem Ergebnisse von einem Wettermodell (WM) und Ergebnisse von einem Fahrzeugleistungsmodell zum Erzeugen einer rekonstruierten Trajektorie kombiniert werden.

15. Das Blockchainerzeugungssystem (200, 600) von Anspruch 11, wobei das eine oder die mehreren Fahrzeuge ein oder mehrere Luftfahrzeuge oder ein oder mehrere Flugzeuge sind.

## Revendications

1. Un procédé mis en oeuvre par ordinateur (100) pour valider un bloc de données à insérer dans une chaîne de blocs de trajectoire de véhicule comprenant les étapes consistantes à :
- fournir (101) un ou plusieurs ensembles de données de trajectoire agrégées (201), un ensemble de données de trajectoire agrégées comprenant au moins des données de trajectoire agrégées définissant une ou plusieurs trajectoires d'un ou plusieurs véhicules ; les données de trajectoire agrégées comprenant des informations de trajectoire obtenues à partir d'une variété de sources de données de trajectoire (401_i, 401_j, 401_k), et dans lequel ces informations de trajectoire ont été agrégées (404) ;
dans lequel la fourniture (101) d'un ou de plusieurs ensembles de données de trajectoire agrégées comprend générer des données de trajectoire agrégées par un procédé (300) comprenant :
- recevoir (301) des données de trajectoire de véhicule, dans lequel la trajectoire de données de véhicule comprend des données reçues de la variété de sources de données de trajectoire (401_i, 401_j, 401_k) ;
- reconstruire (302) les données de trajectoire du véhicule, fournir une ou plusieurs trajectoires reconstruites ; et
- fusionner (303) la une ou les plusieurs trajectoires reconstruites, fournissant des données de trajectoire agrégées (404) dans un ou plusieurs ensembles ;
- générer (102) un bloc de données (202) à partir du ou des plusieurs ensembles de données de trajectoire agrégées (201) ;
- miner (103) le bloc de données pour vérifier si le bloc de données comprend des données de véhicule valides ; et
- si le bloc de données comprend des données de véhicule valides, valider (104) le bloc de données pour l'insertion dans une chaîne de blocs de trajectoire de véhicule.

2. Le procédé (100) de la revendication 1 comprenant en outre insérer (105) le bloc de données dans une chaîne de blocs de trajectoire de véhicule (204), dans lequel la chaîne de blocs de trajectoire de véhicule comprend des données de trajectoire de véhicule robustes et précises représentant des trajectoires de véhicule.

3. Le procédé (100) de la revendication 1, dans lequel recevoir (301) la trajectoire de données de véhicule comprend recevoir un ou plusieurs des suivants :
- des données de suivi comprenant ou plus de la latitude, et/ou la longitude, et/ou l'altitude et/ou le temps de vol d'un véhicule ; et/ou
- des données cinématiques comprenant une ou plusieurs de vitesses aire et/ou vitesse de vol d'un véhicule par rapport au sol, et/ou
- des données cinétiques comprenant une ou plusieurs de la consommation de carburant du vol d'un véhicule et/ou la masse instantanée du véhicule.

4. Le procédé (100) de la revendication 1, dans lequel reconstruire (302) la trajectoire de données de véhicule comprend combiner des résultats d'un modèle météo et des résultats d'un modèle de performance de véhicule pour générer une trajectoire reconstruite.

5. Le procédé (100) de la revendication 1, dans lequel la fusion (303) de la une ou des plusieurs trajectoires reconstruites comprend au moins l'un parmi :
- calculer une moyenne pondérée de paramètres constituant un ensemble de reconstructions de trajectoire ; et/ou
- calculer une moyenne pondérée de paramètres constituant un ensemble de reconstructions de trajectoire et corriger avec une erreur sur la base de mesures de suivi par radar ; et/ou
- corréler une moyenne pondérée de paramètres composant un ensemble de reconstructions de trajectoire avec des données enregistrées réelles du véhicule.

6. Le procédé (100) de la revendication 1, dans lequel générer (102) un bloc de données à partir de l'un ou des plusieurs ensembles de données de trajectoire agrégées comprend générer un en-tête et un hachage de l'en-tête d'un bloc précédent dans la chaîne de blocs.

7. Le procédé (100) de la revendication 1, dans lequel miner (103) le bloc de données pour vérifier si le bloc de données comprend des données de véhicule valides comprend :
- traiter les données de trajectoire incluses dans le bloc de données ; et/ou
- confirmer les données de trajectoire ; et/ou
- filtrer des données.

8. Le procédé (100) de la revendication 1 comprenant en outre rejeter (81) des données de véhicule inexactes, dans lequel les données de véhicule inexactes comprennent une ou plusieurs représentations de trajectoires de véhicule qui ne sont pas valides.

9. Le procédé (100) de la revendication 1, comprenant
- insérer (105) le bloc de données dans une chaîne de blocs de trajectoire de véhicule (204), et
- récupérer des données de trajectoire du véhicule à partir de la chaîne de blocs de trajectoire du véhicule (204).

10. Le procédé (100) de la revendication 1, dans lequel le un ou les plusieurs véhicules est un ou plusieurs véhicules aériens ou un ou plusieurs aéronefs.

11. Un système de génération de chaîne de blocs (500) comprenant :
- un processeur (501) ;
- une mémoire (502) en communication avec le processeur (501), la mémoire comprenant des instructions de programme lisibles par ordinateur qui, lorsqu'elles sont exécutées par le processeur, amènent le processeur à exécuter le procédé de la revendication 1.

12. Le système de génération de chaîne de blocs (200, 600) de la revendication 11, comprenant :
- un moteur de génération de bloc de données (202, 601) configuré pour générer un bloc de données à partir d'un ou de plusieurs ensembles de données de trajectoire agrégées (201, 404) ; les données de trajectoire agrégées comprenant des informations de trajectoire obtenues à partir d'une variété de sources de données de trajectoire (401_i, 401_j, 401_k), et dans lequel de telles informations de trajectoire ont été agrégées (404) ;
- un mineur de chaîne de blocs (203, 602) configuré pour miner le bloc de données afin de vérifier si le bloc de données comprend des données de véhicule valides et configuré pour, si le bloc de données comprend des données de véhicule valides, valider (104) le bloc de données pour l'ajout dans une chaîne de blocs de trajectoire de véhicule (603) ; et
- un module d'addition (204) configuré pour, dès la validation (104) du bloc de données pour l'addition, ajouter le bloc de données dans une chaîne de blocs de trajectoire de véhicule (204, 603), dans lequel la chaîne de blocs de trajectoire de véhicule comprend des données de trajectoire de véhicule robustes et précises représentant des trajectoires de véhicule.

13. Le système de génération de chaîne de blocs (200, 600) de la revendication 11, comprenant :
- un moteur de génération de bloc de données (202, 601) configuré pour générer un bloc de données à partir d'un ou de plusieurs ensembles de données de trajectoire agrégées (201) ;
- un mineur de chaîne de blocs (203, 602) configuré pour miner le bloc de données afin de vérifier si le bloc de données comprend des données de véhicule valides et pour, si le bloc de données comprend des données de véhicule valides, valider (104) le bloc de données pour l'addition dans une chaîne de blocs de trajectoire de véhicule (603) ;
- un module d'addition (204) configuré pour, dès la validation (104) du bloc de données pour l'addition, ajouter le bloc de données dans une chaîne de blocs de trajectoire de véhicule (204, 603) ; et
- un module de stockage configuré pour stocker la chaîne de blocs de trajectoire de véhicule dans une base de données de trajectoire de véhicule.

14. Le système de génération de chaîne de blocs (200, 600) de la revendication 11 comprenant un moteur de reconstruction de trajectoire, TRE (*trajectory reconstruction engine*) (402), pour reconstruire (302) la trajectoire de données de véhicule combinant des résultats d'un modèle météo (WM, *weather model*) et des résultats d'un modèle de performance de véhicule pour générer une trajectoire reconstruite.

15. Le système de génération de chaîne de blocs (200, 600) de la revendication 11, dans lequel le un ou les plusieurs véhicules est un ou plusieurs véhicules aériens ou un ou plusieurs aéronefs.
